# DEMANDE DE BREVET EUROPEEN

(11) **EP 0 554 135 A1**
(43) Date de publication de la demande: **04.08.1993**
(21) Numéro de dépôt: 93400097.7
(22) Date de dépôt: 15.01.1993
(51) Int. Cl.: A21C 11/00, A21C 11/22, A23L 1/16

(54) **Large pâte alimentaire globalement plane**

(30) Priorité: 22.01.1992 FR 9201133
(71) Demandeur: FRAISNOR, SARL, F-62217 Tilloy Les Mofflaines (FR)
(72) Inventeur: Delecroix, Philippe Paul Rolland, F-62000 Arras (FR)
(74) Mandataire: Ecrepont, Robert

(57) **Abrégé**

L'invention se rapporte à une pâte alimentaire globalement plane constituée d'une bande sensiblement plane de matériau dont l'épaisseur (E) est généralement faible par rapport à ses autres dimensions transversale et longitudinale, cette bande de matériau pourvue de nervures (6) longitudinales de même texture que celle constituant la bande de matériau et réparties sur toute la dimension transversale de la bande.

Elle est caractérisée en ce que ces nervures sont situées sur l'une (4) des faces (4, 5) de la bande de l'âme de la bande et ont une hauteur (H) équivalente à au moins deux fois l'épaisseur (E) de la bande.

## Description

L'invention se rapporte à une large pâte alimentaire globalement plane notamment les pâtes planes recevant une garniture comme celles utilisées pour la fabrication de gâteau de lasagne.

Pour cette fabrication, on superpose une pluralité de larges bandes de pâtes globalement planes entre lesquelles on dépose une couche de farce.

Celle-ci qui, par exemple, est confectionnée à l'aide de viande hachée et de sauce tomate, est généralement relativement liquide notamment avant la cuisson.

Il est bien entendu que tout type de garniture ou farce peut remplacer l'exemple précité.

Habituellement, ces pâtes alimentaires globalement planes sont constituées à partir d'une bande plane qui, par rapport à ses dimensions longitudinale et transversale, est de faible épaisseur.

Eventuellement, dans un but décoratif et sur une faible largeur, les bords longitudinaux sont ondulés par passage entre des molettes de formes complémentaires (US-A-4.289.470, 4.780.329).

Sur l'essentiel de sa largeur, cette bande reste plane ou tout au plus, afin de la raidir, présente sur ses deux faces, des nervures longitudinales de hauteur au plus égale à l'épaisseur de la bande.

Par rapport à l'épaisseur de la pâte, l'épaisseur de la couche de farce est beaucoup plus importante et couramment supérieure à quatre fois l'épaisseur de la pâte.

De ce fait, lorsque, par exemple, on confectionne un gâteau de lasagne, la farce tend à s'écouler tant transversalement que selon l'axe longitudinal de la pâte.

Un des résultats que l'invention vise à obtenir est une large pâte alimentaire globalement plane qui remèdie aux problèmes précités.

A cet effet, l'invention a pour objet un telle pâte alimentaire globalement plane constituée par une bande sensiblement plane de matériau de faible épaisseur par rapport à ses dimensions longitudinale et transversale, cette pâte, pourvue de nervures longitudinales de même matière que celle de la bande de pâte réparties sur toute la largeur, étant caractérisée en ce que ces nervures sont situées sur l'une des faces de la bande de matériau et ont une hauteur équivalente à au moins deux fois l'épaisseur de la bande formant l'âme.

L'invention sera bien comprise à l'aide de la description ci-aprés faite à titre d'exemple non limitatif en regard du dessin ci-annexé qui représente schématiquement :
- figure 1 : une pâte alimentaire plane selon l'invention,
- figure 2 : une variante de réalisation de cette pâte alimentaire,

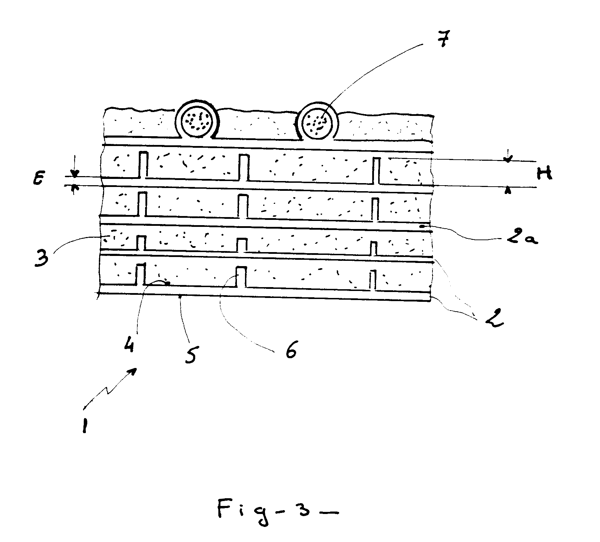

- figure 3 : une vue en coupe d'un gâteau confectionné à l'aide de pâte plane selon l'invention.

En se reportant au dessin, on voit que le gâteau 1 a été confectionné à l'aide d'une pluralité de pâtes 2 globalement planes entre lesquelles sont disposées des couches 3 de farce.

Cette farce est généralement confectionnée avec de la sauce tomate et de la viande hachée mais tout autre type de farce peut convenir.

Cette farce est relativement liquide.

Chaque pâte plane 2 est constituée d'une bande 2a sensiblement plane de matériau dont l'épaisseur E est généralement faible par rapport à ses autres dimensions transversale et longitudinale.

La bande 2a de matériau forme l'âme de la pâte, laquelle âme est pourvue de nervures 6 longitudinales de même matière que celle constituant la bande 2a et réparties sur toute la dimension transversale de la bande.

Selon l'invention, ces nervures 6 sont situées sur l'une 4 des faces 4, 5 de la bande 2a de matériau et ont une hauteur H sensiblement équivalente à l'épaisseur de la farce que l'on veut pouvoir disposer et, quoiqu'il en soit, au moins égale à deux fois l'épaisseur de la bande 2a formant l'âme.

De préférence, la hauteur H de la nervure est comprise entre deux et six fois l'épaisseur de la bande.

Dans le gâteau, les chants des nervures pourront servir ainsi d'appui à la pâte immédiatement supérieure.

Préférentiellement, la hauteur H de la nervure est égale à quatre fois l'épaisseur E de la dite bande 2a de matériau.

Les nervures 6 peuvent être rectilignes mais avantageusement présenter, en vue de dessus, des irrégularités de forme.

De préférence, pour constituer cette irrégularité, la nervure 6 a, vue de dessus, une forme sinusoïdale.

Dans une autre forme de réalisation (non représentée), pour constituer cette irrégularité, les nervures 6 ont toujours, vues de dessus, une forme de ligne brisée en zig-zag.

L'amplitude A de la nervure c'est à dire de la sinusoïde ou de la ligne brisée est telle que, sans nuire au raidissement de la bande, elle définit des surfaces 6a dites de freinage qui, inclinées par rapport à l'axe longitudinal de la bande de pâte, freinent le déplacement de la farce selon l'axe longitudinal précité.

L'amplitude A de la sinusoïde ou de la ligne brisée est au moins égale à trois fois l'épaisseur de la bande de matériau et de préférence est comprise entre trois et cinq fois l'épaisseur de la bande.

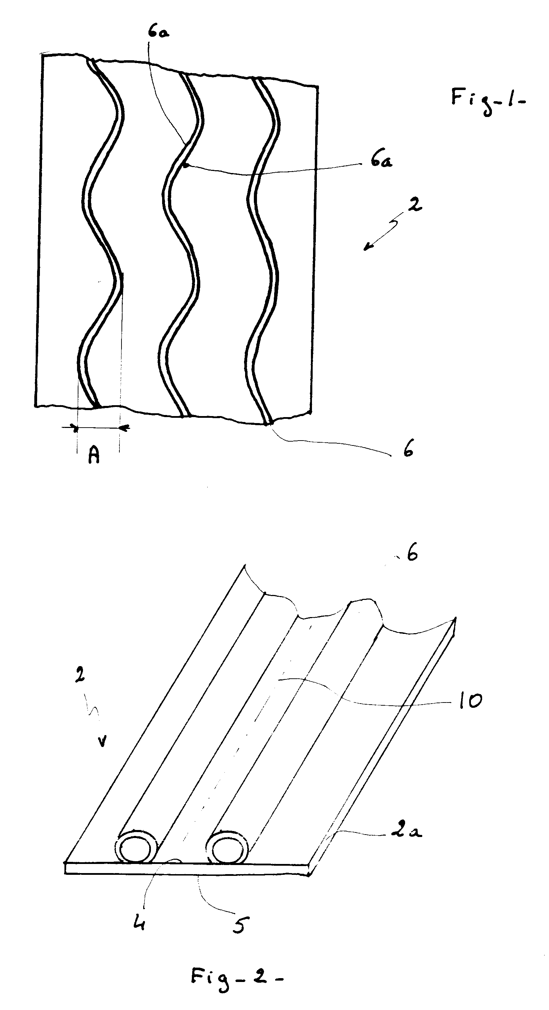

Dans une forme avantageuse de réalisation (figure 2), la nervure 6 est creuse de sorte qu'à l'intérieur de la nervure, il est possible d'introduire une farce 7 qui peut être de même type que celle destinée à former la couche 3 disposée entre deux bandes de pâte ou d'un tout autre type.

Avantageusement, la nervure est tubulaire à section sensiblement circulaire.

Cette disposition évite le mélange des farces.

Bien entendu, la bande de pâte, commercialisée brute ou déjà farçie, peut être utilisée autrement que pour la confection de gâteau du type précité.

Notamment dans ce cas, la bande 2 de pâte peut être vrillée selon son axe longitudinal 10.

Afin d'obtenir la même texture pour la nervure et pour l'âme, la pâte plane pourvue de ses nervures est avantageusement obtenue par extrusion.

Le passage dans la tête d'extrusion assure avantageusement un travail de la pâte qui en améliore la texture.

Par des formes de filière adaptée, la pression de la pâte peut varier entre différents points de la filière ce qui permet par exemple d'obtenir par la seule extrusion les ondulations des nervures mais, sans sortir de l'invention, les nervures pourraient être rapportées sur l'âme extrudée isolément.

## Revendications

1. Pâte alimentaire globalement plane constituée d'une bande (2a) sensiblement plane de matériau dont l'épaisseur (E) est généralement faible par rapport à ses autres dimensions transversale et longitudinale, cette bande (2a) de matériau pourvue de nervures (6) longitudinales de même texture que celle constituant la bande (2a) de matériau et réparties sur toute la dimension transversale de la bande,
cette pâte étant **CARACTERISEE** en ce que ces nervures sont situées sur l'une (4) des faces (4, 5) de la bande (2a) de l'âme de la bande (2a) et ont une hauteur (H) équivalente à au moins deux fois l'épaisseur (E) de la bande (2a).

2. Pâte selon la revendication 1 **caractérisée** en ce que la hauteur (H) de la nervure est comprise entre deux et six fois l'épaisseur de la bande.

3. Pâte selon la revendication 1 ou 2 **caractérisée** en ce que les nervures (6) présentent une irrégularité de forme et, plus précisément, ont, vues de dessus, une forme de ligne brisée en zig-zag.

4. Pâte selon la revendication 1 ou 2 **caractérisée** en ce que les nervures (6) présentent une irrégularité de forme et, ont, vues de dessus, une forme sinusoïdale.

5. Pâte selon la revendication 3 ou 4 **caractérisée** en ce que l'amplitude (A) de la nervure est telle que, sans nuire au raidissement de la bande, elle définit des surfaces (6a) dites de freinage qui, inclinées par rapport à l'axe longitudinal de la bande de pâte, freinent le déplacement de la farce selon l'axe longitudinal précité.

6. Pâte selon l'une quelconque des revendications 3 à 5 **caractérisée** en ce que l'amplitude (A) de l'irrégularité est au moins égale à trois fois l'épaisseur (E) de la bande de matériau.

7. Pâte selon la revendication 1 ou 2 **caractérisée** en ce que la nervure (6) est creuse.

8. Pâte selon la revendication 7 **caractérisée** en ce la nervure est tubulaire à section circulaire.

9. Pâte selon l'une quelconque des revendications 1 à 8 **caractérisée** en ce que la bande (2) de pâte est vrillée selon son axe longitudinal (10).
